# EUROPÄISCHE PATENTSCHRIFT

(11) **EP 3 766 851 B1**
(45) Veröffentlichungstag und Bekanntmachung des Hinweises auf die Patenterteilung: **22.01.2025**
(21) Anmeldenummer: 19186865.2
(22) Anmeldetag: 17.07.2019
(51) Int. Cl.: C03B 37/012, C03B 37/027

(54) **VERFAHREN ZUR HERSTELLUNG EINER HOHLKERNFASER UND ZUR HERSTELLUNG EINER VORFORM FÜR EINE HOHLKERNFASER**
METHOD FOR PRODUCING A HOLLOW CORE FIBRE AND FOR PRODUCING A PREFORM FOR A HOLLOW CORE FIBRE
PROCÉDÉ DE FABRICATION D'UNE FIBRE À COEUR CREUX ET DE FABRICATION D'UNE PRÉFORME DE FIBRE À COEUR CREUX

(43) Veröffentlichungstag der Anmeldung: 20.01.2021
(73) Patentinhaber: Heraeus Quarzglas GmbH & Co. KG, 63450 Hanau (DE)
(72) Erfinder: ROSENBERGER, Manuel, 63450 Hanau (DE); HÜNERMANN, Michael, 63450 Hanau (DE); TROMMER, Martin, 63450 Hanau (DE); SCHUSTER, Kay, 63450 Hanau (DE); WEIMANN, Steffen, 63450 Hanau (DE)
(74) Vertreter: Gille Hrabal Partnerschaftsgesellschaft mbB Patentanwälte

(56) Entgegenhaltungen:
- DE-A1- 102014 011 041
- BEN SHERLOCK ET AL: "Tunable fibre-coupled multiphoton microscopy with a negative curvature fibre", JOURNAL OF BIOPHOTONICS, vol. 9, no. 7, 15 March 2016 (2016-03-15), DE, pages 715 - 720, XP055299632, ISSN: 1864-063X, DOI: 10.1002/jbio.201500290

## Beschreibung

### Technischer Hintergrund

Die Erfindung betrifft ein Verfahren zur Herstellung einer Antiresonanten Hohlkernfaser, die einen sich entlang einer Faser-Längsachse erstreckenden Hohlkern und einen den Hohlkern umgebenden Mantelbereich, der eine Anzahl von Antiresonanzelementen umfasst, mit den Verfahrensschritten:
(a) Bereitstellen einer primären Vorform für die Hohlkernfaser, die mindestens ein Hüllrohr umfasst, das eine Hüllrohr-Innenbohrung und eine Hüllrohr-Längsachse aufweist, entlang der sich eine von einer Innenseite und einer Außenseite begrenzte Hüllrohr-Wandung erstreckt,
(b) Bildung einer Anzahl von Vorstufen oder von Vorformlingen für Antiresonanzelemente an Soll-Positionen der Hüllrohr-Wandung, und
(c) Weiterverarbeitung der primären Vorform zu einer sekundären Vorform, aus der die Hohlkernfaser gezogen wird, wobei die Weiterverarbeitung ein einmaliges oder wiederholtes Aufkollabieren von zusätzlichem Mantelmaterial in Form eines Überfangzylinders umfasst, wobei der Überfangzylinder eine dem Hüllrohr zugewandte Überfangzylinder-Innenseite, eine Überfangzylinder-Außenseite und dazwischen einen Überfangzylinder-Wandung aufweist.

Außerdem betrifft die Erfindung ein Verfahren zur Herstellung einer Vorform für eine Antiresonante Hohlkernfaser, die einen sich entlang einer Faser-Längsachse erstreckenden Hohlkern und den Hohlkern umgebenden Mantelbereich aufweist, der mehrere Antiresonanzelemente umfasst, mit den Verfahrensschritten:
(a) Bereitstellen einer primären Vorform für die Hohlkernfaser, , die mindestens ein Hüllrohr umfasst, das eine Hüllrohr-Innenbohrung und eine Hüllrohr-Längsachse aufweist, entlang der sich eine von einer Innenseite und einer Außenseite begrenzte Hüllrohr-Wandung erstreckt,
(b) Bildung einer Anzahl von Vorstufen oder von Vorformlingen für Antiresonanzelemente an Soll-Positionen der Hüllrohr-Wandung, und
(c) Weiterverarbeitung der primären Vorform zu einer sekundären Vorform für die Hohlkernfaser, wobei die Weiterverarbeitung ein einmaliges oder wiederholtes Aufkollabieren von zusätzlichem Mantelmaterial in Form eines Überfangzylinders umfasst, wobei der Überfangzylinder eine dem Hüllrohr zugewandte Überfangzylinder-Innenseite, eine Überfangzylinder-Außenseite und dazwischen einen Überfangzylinder-Wandung aufweist.

Herkömmliche Monomode-Lichtleitfasern aus Vollmaterial haben einen Kernbereich aus Glas, der von einem Mantelbereich aus Glas mit niedrigerem Brechungsindex umgeben ist. Die Lichtleitung beruht dabei auf Totalreflexion zwischen Kern- und Mantelbereich. Die Wechselwirkungen des geführten Lichtes mit dem Vollmaterial sind jedoch mit einer erhöhten Latenz bei der Datenübertragung und relativ niedrigen Schädigungsschwellen gegenüber energiereicher Strahlung verbunden.

Diese Nachteile vermeiden oder verringern "Hohlkernfasern", bei denen der Kern einen evakuierten, mit Gas oder Flüssigkeit gefüllten Hohlraum umfasst. In Hohlkernfasern ist die Wechselwirkung des Lichtes mit dem Glas geringer als in Vollkernfasern. Der Brechungsindex des Kerns ist kleiner als der des Mantels, so dass eine Lichtleitung durch Totalreflexion nicht möglich ist und das Licht normalerweise aus dem Kern in den Mantel entweichen würde. In Abhängigkeit vom physikalischen Mechanismus der Lichtleitung werden Hohlkernfasern unterteilt in "photonische Bandlückenfasern" und "Antiresonanz-Reflexionsfaser".

Bei "photonischen Bandlückenfasern" ist der hohle Kernbereich von einem Mantel umgeben, in dem kleine Hohlkanäle periodisch angeordnet sind. Die periodische Struktur der Hohlkanäle im Mantel bewirkt den in Anlehnung an die Halbleitertechnologie als "photonische Bandlücke" bezeichneten Effekt, wonach an den Mantelstrukturen gestreutes Licht bestimmter Wellenlängenbereiche aufgrund von Braggreflexion im zentralen Hohlraum konstruktiv interferiert und sich nicht transversal im Mantel ausbreiten kann.

Bei der als "Antiresonante Hohlkernfaser" ("antiresonant hollow-core fibers"; AR-HCF) bezeichneten Ausführungsform der Hohlkernfaser ist der hohle Kernbereich von einem inneren Mantelbereich umgeben, in dem sogenannte "antiresonante Elemente" (oder "Antiresonanzelemente"; kurz: "AREs") angeordnet sind. Die um den Hohlkern gleichmäßig verteilten Wandungen der Antiresonanzelemente können als in Antiresonanz betriebene Fabry-Perot-Kavitäten wirken, die das auftreffende Licht reflektieren und durch den Faserkern leiten.

Diese Fasertechnologie verspricht eine niedrige optische Dämpfung, ein sehr breites Transmissionsspektrum (auch im UV- oder IR-Wellenlängenbereich) und eine geringe Latenz bei der Datenübertragung.

Potentielle Anwendungen der Hohlkernfasern liegen auf dem Gebiet der Datenübertragung, der Hochleistungsstrahlführung, beispielsweise zur Materialbearbeitung, der Modalfilterung, der nichtlinearen Optik, insbesondere zur Superkontinuumserzeugung, vom ultravioletten bis infraroten Wellenlängenbereich.

### Stand der Technik

Ein Nachteil Antiresonanter Hohlkernfasern liegt darin, dass Moden höherer Ordnung nicht zwangsläufig unterdrückt werden, so dass sie über große Übertragungslängen häufig nicht rein einmodig sind und sich die Qualität des Ausgangsstrahls verschlechtert.

Im Paper von Francesco Poletti "Nested antiresonant nodeless hollow core fiber"; Optics Express, Vol. 22, No. 20 (2014); DOI: 10.1364/OE 22.023807, wird ein Faserdesign vorgeschlagen, bei dem Antiresonanzelemente nicht als einfaches singuläres Strukturelement ausgebildet sind, sondern sich aus mehreren, miteinander verschachtelten (englisch: nested) Strukturelementen zusammensetzen. Die verschachtelten Antiresonanzelemente sind so ausgelegt, dass Kernmoden höherer Ordnung phasenangepasst an die Mantelmoden sind und unterdrückt werden, aber nicht die fundamentale Kernmode. Dadurch ist die Ausbreitung der fundamentalen Kernmode stets gewährleistet und die Hohlkernfaser kann über einen begrenzten Wellenlängenbereich effektiv einmodig gemacht werden.

Die effektive Modenunterdrückung hängt von der Mittenwellenlänge des übertragenen Lichts und von Strukturparametern des Faserdesigns ab, wie dem Radius des Hohlkerns und der Durchmesserdifferenz von verschachtelten Ringstrukturen in den Antiresonanzelementen.

Aus der EP 3 136 143 A1 ist eine Antiresonante Hohlkernfaser bekannt (dort bezeichnet als "Hohlkernfaser ohne Bandlücke"), bei der der Kern neben der Fundamentalmode noch weitere Moden leiten kann. Zu diesem Zweck ist er von einem inneren Mantel mit "nicht-resonanten Elementen" umgeben, die eine Phasenanpassung von antiresonanten Moden mit den höheren Moden liefern. Die Herstellung der Hohlkernfaser erfolgt nach einer sogenannten "stack-and-draw-Technik", indem die Ausgangselemente zu einem achsenparallelen Ensemble angeordnet und zu einer Vorform fixiert werden und die Vorform anschließend elongiert wird. Hierbei wird ein Hüllrohr mit hexagonalem Innenquerschnitt verwendet und in den Innenkanten des Hüllrohres werden sechs sogenannte "ARE-Vorformen" (Anti-Resonanz-Element-Vorformen) fixiert. Diese Vorform wird in zwei Stufen zu einer Hohlkernfaser ausgezogen.

Aus der WO 2018/169487 A1 ist ein Verfahren zur Herstellung einer Vorform für antiresonante Hohlkernfasern bekannt, bei dem ein erster Mantelbereich eine Vielzahl an Stäben und ein zweiter Mantelbereich eine Vielzahl von Rohren umfasst, die von einem äußeren Hüllrohr umgeben sind. Stäbe, Rohre und Hüllrohr werden mittels "Stack and draw"-Technik zur Bildung einer Vorform zusammengefügt. Vor dem Elongieren der Vorform wird das Vorformende versiegelt, was durch Aufbringen einer Siegelmasse geschieht. Als Siegelmasse wird beispielsweise ein UV-Kleber eingesetzt.

Die DE 10 2014 011 041 A1 offenbart ein Verfahren zur Herstellung einer optischen Durchflussmesshohlfaser, bei der die Lichtleitung auf einem doppel-antiresonanten Führungsprinzip beruht. Dadurch soll die Ausbildung von Moden höherer Ordnung vermieden werden. Der zentrale Hohlkern hat ein Hohlkernwand mit polygonalem Querschnitt und ist von Luftkammern mit Luftklammerwänden umgeben, die mit den Eckpunkten des Polygons in Verbindung stehen. Das Herstellungsverfahren für die optische Durchflussmesshohlfaser umfasst das Stapeln von Kapillaren zu einer Packung und das Umhüllen mit einem inneren Mantelrohr, ein druckbeaufschlagtes Strecken und Versintern der Packung zu einer ersten Vorform, das Überfangen der ersten Vorform mit einem äußeren Mantelrohr unter Bildung einer zweiten Vorform und ein druckbeaufschlagtes Verziehen der Vorform zur optischen Durchflussmesshohlfaser. Als Material für die Kapillare und die Mantelrohre wird Quarzglas vorgeschlagen, das teilweise oder vollständig dotiert sein kann, wobei als Dotierstoffe unter anderem Fluor genannt wird.

Ben Sherlock et al. beschreiben in "Tunable fibre-coupled multiphoton microscopy with a negative curvature fibre*, Journal of Biophotonics, Bd. 9, Nr. 7, 15. März 2016 (2016-03-15), Seiten 715-720, ISSN: 1864-063X; eine Vorform für eine Antiresonanzelement-Hohlkernfaser, die einen Überfangzylinder aus fluordotiertem Quarzglas aufweist. Durch die geringere Viskosität des fluordotierten Quarzglases wird eine niedrigere Ziehtemperatur und eine bessere Erhaltung der Struktur ermöglicht.

### Technische Aufgabenstellung

Antiresonante Hohlkernfasern und insbesondere solche mit verschachtelten Strukturelementen haben komplexe Innengeometrien, was ihre exakte und reproduzierbare Herstellung erschwert. Dies gilt umso mehr, da zur Einhaltung der Resonanzbeziehungsweise Antiresonanzbedingungen bereits geringe Maßabweichungen in der Größenordnung der Arbeitswellenlänge des zu führenden Lichts nicht tolerierbar sind. Abweichungen von der Soll-Geometrie können ihre Ursache bei der Konfiguration der Faser-Vorform haben, und sie können auch durch ungewollte nichtmaßstäbliche Verformungen beim Faserziehprozess auftreten.

Bei der bekannten "Stack-and-Draw"-Technik sind viele Elemente positionsgenau zusammenzufügen. Beispielsweise müssen zur Herstellung der aus dem eingangs genannten Paper bekannten Hohlkernfaser im "NANF"-Design sechs Antiresonanzelement-Vorformlinge, jeweils bestehend aus einem Antiresonanzelement-Außenrohr (kurz: ARE-Außenrohr) und einseitig an der Innenmantelfläche des ARE-Außenrohres eingeschweißtem Antiresonanzelement-Innenrohr (kurz: ARE-Innenrohr), an der Innenseite eines Hüllrohres angebracht werden.

Zur Realisierung geringer Dämpfungswerte und breiter Transmissionsbereiche ist neben einer gleichmäßigen Wandstärke der Wandungen der Antiresonanzelemente auch die azimutale Position der Antiresonanzelemente innerhalb des Hüllrohres wichtig. Dies ist mit der "Stack-and-Draw"-Technik nicht ohne Weiteres zu realisieren. Ziel der Erfindung ist, ein Verfahren zur kostengünstigen Herstellung einer Antiresonanten Hohlkernfaser anzugeben, das Beschränkungen herkömmlicher Herstellungsverfahren vermeidet.

Insbesondere ist es Ziel der Erfindung, ein Verfahren zur Herstellung einer Antiresonanten Hohlkernfaser und einer Vorform für Antiresonante Hohlkernfasern bereitzustellen, mit dem reproduzierbar eine hohe Präzision der Strukturelemente und eine exakte Positionierung der Antiresonanzelemente in der Faser in einer ausreichend stabilen und reproduzierbaren Weise erreicht werden kann Außerdem sollen Nachteile der klassischen "Stack and Draw"-Technik, mit der die erforderlichen Strukturgenauigkeiten, insbesondere eine gleichmäßige Wandstärke der Antiresonanzelemente und eine exakte Positionierung an vorgegebenen azimutalen Positionen nicht einfach zu erreichen ist, möglichst vermieden werden.

### Zusammenfassung der Erfindung

Hinsichtlich der Herstellung der Antiresonanten Hohlkernfaser wird diese Aufgabe ausgehend von einem Verfahren der eingangs genannten Gattung erfindungsgemäß dadurch gelöst, dass bei der Weiterverarbeitung der primären Vorform gemäß Verfahrensschritt (c) ein Überfangzylinder eingesetzt wird, der ein radiales Viskositätsprofil aufweist, bei dem die Viskosität in der Überfangzylinder-Wandung von einem Viskositäts-Minimum η(Zmin) zur Überfangzylinder-Innenseite hin zunimmt.

Ausgangspunkt für die Herstellung der Antiresonanten Hohlkernfaser ist eine Vorform, die hier auch als "Cane" oder als "primäre Vorform" bezeichnet wird. Sie umfasst ein Hüllrohr, in dem oder an dem Vorstufen oder Vorformlinge für die Ausformung Antiresonanter Elemente in den Hohlkernfasern (hier kurz als "Antiresonanzelemente" bezeichnet) enthalten sind. Die primäre Vorform kann zu der Hohlkernfaser elongiert werden; in der Regel wird der primären Vorform aber zusätzliches Mantelmaterial hinzugefügt, um daraus eine hier als "sekundäre Vorform" bezeichnete Vorform zu erzeugen. Gegebenenfalls wird die Hohlkernfaser durch Elongieren der sekundären Vorform erzeugt. Alternativ werden die primäre Vorform oder die sekundäre Vorform unter Ausbildung eines koaxialen Ensembles von Bauteilen mit einem Überfangzylinder oder mit mehreren Überfangzylindern umgeben und das koaxiale Ensemble direkt zu der Hohlkernfaser elongiert. Der allgemeine Begriff "Vorform" wird hier zur Bezeichnung desjenigen Bauteils oder desjenigen koaxialen Ensembles von Bauteilen verstanden, aus der die Hohlkernfaser letztlich gezogen wird.

Das Hinzufügen von Mantelmaterial erfolgt beispielsweise durch Aufkollabieren eines Überfangzylinders auf die primäre Vorform. Die koaxiale Anordnung aus primärer Vorform und Überfangzylinder wird beim Aufkollabieren des Überfangzylinders elongiert, oder sie wird nicht elongiert. Dabei werden die Antiresonanzelement-Vorformlinge in ihrer Form oder Anordnung verändert, oder sie werden in ihrer Form oder Anordnung nicht verändert

Die Durchführung von einem der in Verfahrensschritt (c) genannten Heißformprozesse (im Folgenden auch als "thermische Prozessierung" bezeichnet) kann zu einer Deformation und Strukturabweichung der angestrebten Fasergeometrie führen. Das ist insbesondere der Fall, wenn sowohl dickwandige und filigrane Vorform-Bestanteile dicht beieinander liegen oder aneinander angrenzen, die aus dem gleichen Material bestehen.

Denn die notwendige Prozessierungstemperatur wird in der Regel durch den flächenstärksten Bestanteil bestimmt; das ist typischerweise der Außenmantelbereich der Vorform. Kleinere Bestanteile (wie die Antiresonanzelement-Vorformlinge und deren einzelnen Strukturelemente) unterliegen bei gleicher Temperatur einer stärkeren Deformation. Da bei der thermischen Prozessierung die Vorform in der Heizzone von außen nach innen erwärmt wird, stellt sich über dem Vorform-Volumen ein radialer Temperaturverlauf mit einem Minimum in der Vorform-Mitte ein. Die kann die erwähnte Deformations-Problematik verstärken, wenn filigrane Bestanteile auf einem Vorform-Radius angeordnet sind, der näher an der Heizzone liegt als ein weniger filigraner Bestanteil, was bei Vorformen für Antiresonante Hohlkernfasern regelmäßig der Fall ist.

Die Viskosität von Einkomponentenglas, insbesondere von Quarzglas, kann durch Dotierungen verändert werden. Durch Verwendung von Materialien mit unterschiedlicher Dotierung und damit angepasster Viskosität kann die Strukturerhaltung während der thermischen Prozessierung gewährleistet werden. Die Dotierung ermöglicht die Anpassung der Viskositäten von benachbarten Vorform-Bestandteilen. Sie kann insbesondere dazu eingesetzt werden, die thermische Stabilität eines Bestandteils zu Gunsten der Stabilität eines benachbarten Bestandteils zu verringern.

Bei Einsatz eines Überfangzylinders zum Überfangen einer primären Vorform kann es allerdings zu einer stufenartigen Viskositätsänderung an der Kontaktfläche zwischen der primären Vorform und dem Überfangzylinder kommen. Diese abrupten Änderungen können in der fertigen (sekundären) Vorform als auch in der finalen Hohlkernfaser zu inneren mechanischen Spannungen führen, die sowohl die optischen als auch die mechanischen Eigenschaften negativ beeinflussen. Dazu gehören die Abweichung der optischen Parameter von den Design-Eigenschaften (Brechzahlfluktuation durch mechanischen Stress) sowie eine zunehmende Bruchneigung.

Die Erfindung zielt insbesondere darauf ab, die Verwendung unterschiedlich dotierter Ausgangsmaterialien für den Überfangzylinders und das Hüllrohr zu ermöglichen, um während der thermischen Prozessierung einer Verformung insbesondere filigraner Strukturelemente entgegenzuwirken, aber ohne dadurch die optischen und mechanischen Faser- und Vorformeigenschaften negativ zu beeinflussen. Dadurch soll eine höhere Genauigkeit der geometrischen Form und der Positionierung der Antiresonanzelemente in der Hohlkernfaser erreicht werden.

Hierzu weist mindestens der Überfangzylinder, und vorzugsweise auch das Hüllrohr, einen Dotierstoff-Konzentrationsgradienten hin zur gemeinsamen Kontaktfläche auf. Beim Überfangzylinder wird dies dadurch erreicht, dass er ein radiales Viskositätsprofil aufweist, bei dem die Viskosität in der Überfangzylinder-Wandung von einem Viskositäts-Minimum η(Zₘᵢₙ) zur Überfangzylinder-Innenseite hin zunimmt.

Dies ermöglicht die Einhaltung von Viskositätsunterschieden zwischen Überfangzylinder und Hüllrohr, ohne dass es zu einer zu großen Stufe an der Kontaktfläche kommt. Denn dadurch wird eine Übergangszone mit angepasster Viskosität an der Kontaktfläche geschaffen, die Verformungen entgegen wirkt und der Strukturerhaltung der Antiresonanzelemente beiträgt.

Das Viskositätsprofil in der Überfangzylinder-Wandung nimmt von einem Viskositäts-Minimum η(Zₘᵢₙ) zur Überfangzylinder-Innenseite hin zu.

Ein radiales Viskositätsprofil mit einem Viskositätsminimum in der Zylinderwandung wird beispielsweise erreicht, indem Dotierstoffe in das Glas des Überfangzylinders eingebracht werden, die die Viskosität des Glases senken und die beim Erwärmen mindestens teilweise entweichen können. Vorzugsweise kommen hier Fluor, Chlor und/oder Hydroxylgruppen zum Einsatz. Der Überfangzylinder besteht daher vorzugsweise aus Quarzglas, wobei das Viskositätsprofil des Überfangzylinders durch mindestens einen die Viskosität von Quarzglas absenkenden Dotierstoff erzeugt wird, wobei der Dotierstoff vorzugsweise Fluor, Chlor und/oder Hydroxylgruppen enthält.

Bei einer bevorzugten Verfahrensweise ist vorgesehen, dass die Viskosität im Bereich der Überfangzylinder-Innenseite einen Viskositäts-Wert η(Z) aufweist, und dass das Hüllrohr im Bereich der Hüllrohr-Außenseite einen Viskositäts-Wert η(M) aufweist, wobei bei einer Messtemperatur von 1250 °C für die Viskositätswerte gilt (bei Angabe der Viskosität als logarithmischer Wert in dPa s): η(M) = η(Z) ±0,5 dPa s, vorzugsweise η(M) = η(Z) ±0,3 dPa s.

Der Viskositäts-Wert an der Hüllrohr-Außenmantelfläche η(M) liegt dabei in einem möglichst engen Band um den Viskositäts-Wert η(Z) des Überfangzylinders im Bereich seiner Innenmantelfläche. Vorzugsweise gilt dabei zusätzlich η(M) größer ist als η(Z).

Als besonders günstig hat sich erwiesen, wenn das Quarzglas des Überfangzylinders als Dotierstoff Fluor in einer Konzentration zwischen 500 und 8000 Gew.-ppm enthält.

Es hat sich außerdem als vorteilhaft erwiesen, wenn es zwischen dem Viskositätsminimum und der Viskosität des Mantelrohes im Bereich der Kontaktfläche eine große Differenz gibt, da diese als Maß für den ansonsten (mit Ausnahme der Kontaktfläche) gewünschten Viskositätsunterschied zwischen Hüllrohr und Überfangzylinder repräsentiert. Somit gilt vorzugsweise für das Viskositäts-Minimum η(Zₘᵢₙ) bei einer Messtemperatur von 1250 °C (bei Angabe der Viskosität als logarithmischer Wert): η(M) - η(Zₘᵢₙ) > 0,8 dPa s, vorzugsweise > 1 dPa s.

Bei einer anderen bevorzugten Verfahrensvariante weist das Hüllrohr zwischen seiner Hüllrohr-Außenseite und seiner Hüllrohr-Innenseite ein radiales Viskositätsprofil auf, bei dem die Viskosität zur Innenseite hin graduell zunimmt.

Zu Einstellung des Viskositäts-Gradienten innerhalb der Hüllrohr-Wandung hat es sich bewährt, wenn das Hüllrohr aus Quarzglas besteht und als Dotierstoff Fluor in einer Konzentration zwischen 500 und 8000 Gew.-ppm eingesetzt wird.

In dem Zusammenhang erweist es sich als vorteilhaft, wenn das Hüllrohr ein Viskositätsprofil mit einem Viskositäts-Maximum η(Mₘₐₓ) hat und dass mindestens ein Teil der Vorstufen für Antiresonanzelemente als rohrförmige Antiresonanzelement-Vorformlinge vorliegen, die vorzugsweise aus mehreren, miteinander verschachtelten Strukturelementen zusammengesetzt sind, umfassend ein ARE-Außenrohr und ein darin eingesetztes ARE-Innenrohr, und dass die Antiresonanzelement-Vorformlinge aus Quarzglas bestehen, das bei einer Messtemperatur von 1250 °C gegenüber der maximalen Viskosität η(Mₘₐₓ) des Quarzglases des Hüllrohres eine um mindestens 0,4 dPas höhere Viskosität, vorzugsweise eine um mindestens 0,5 dPas höhere Viskosität, aufweist (bei Angabe der Viskosität als logarithmischer Wert).

Überfangzylinder und Hüllrohr bestehen im bevorzugten Fall aus Quarzglas. Eine Fluor-Dotierung des durch den Überfangzylinder bereitgestellten zusätzlichen Mantelmaterials ermöglicht eine weitgehende Absenkung der Viskosität gegenüber dem Quarzglas des Hüllrohres, auch wenn das Quarzglas des Hüllrohres selbst keinen Dotierstoff enthält. Es hat sich als günstig erwiesen, wenn das Quarzglas des Hüllrohres bei einer Messtemperatur von 1250 °C eine um mindestens 0,5 dPa s höhere Viskosität aufweist, vorzugsweise eine um mindestens 0,6 dPa s höhere Viskosität, als das Quarzglas des zusätzlichen Mantelmaterials. Die Angabe der Viskositätsunterschiede erfolgt hier und im Folgenden als logarithmischer Viskositätswert in dPa s.

Bei einer vorteilhaften Verfahrensweise bestehen alle Vorform-Bestandteile der Vorform aus unterschiedlichen Quarzglasqualitäten, wobei die Viskosität der Quarzglasqualitäten in erster Näherung von außen nach innen gesehen zunimmt. Zur Viskositätseinstellung können außer Fluor auch andere Dotierstoffe wie Al₂O₃, Stickstoff, Chlor und Hydroxylgruppen verwendet werden. Im einfachsten Fall genügt es aber, wenn nur das zusätzliche Mantelmaterial aus Fluor enthaltendem Quarzglas besteht.

Bei einer weiteren bevorzugten Verfahrensweise liegt mindestens ein Teil der Vorstufen für Antiresonanzelemente als rohrförmige Antiresonanzelement-Vorformlinge vor, die vorzugsweise aus mehreren, miteinander verschachtelten Strukturelementen zusammengesetzt sind, umfassend ein ARE-Außenrohr und ein darin eingesetztes ARE-Innenrohr, wobei die Antiresonanzelement-Vorformlinge aus Quarzglas bestehen, das bei einer Messtemperatur von 1250 °C gegenüber dem Quarzglas des Hüllrohres eine um mindestens 0,4 dPa s höhere Viskosität, vorzugsweise eine um mindestens 0,5 dPa s höhere Viskosität, aufweist.

Das Quarzglas des ARE-Außenrohres kann dabei einen die Viskosität erhöhenden Dotierstoff, wie beispielsweise Stickstoff oder Al₂O₃ enthalten. Es hat sich aber als besonders vorteilhaft erwiesen, wenn das Hüllrohr aus Quarzglas besteht, das einen die Viskosität von Quarzglas absenkenden Dotierstoff enthält.

Im Hinblick auf eine hohe thermische Stabilität der ARE-Innenrohre im Fall verschachtelter Strukturelemente, hat es sich bewährt, wenn mindestens ein Teil der ARE-Innenrohre, bevorzug alle ARE-Innenrohre aus Quarzglas bestehen, das bei einer Messtemperatur von 1250 °C gegenüber dem Quarzglas des ARE-Außenrohres eine um mindestens 0,4 dPa s höhere Viskosität, vorzugsweise eine um mindestens 0,5 dPa s höhere Viskosität, aufweist.

Das Hüllrohr wird bevorzugt in einem Vertikalziehverfahren ohne Formwerkzeug mit zweistufigem Elongierprozess hergestellt. In der ersten Stufe wird ein Ausgangshohlzylinders aus Glas zur Einstellung von Ausgangshohlzylinder-Endma-βen mechanisch bearbeitet. Der Ausgangszylinder wird in einem ersten Elongierprozess mit vertikal orientierter Längsachse kontinuierlich einer Heizzone mit einer ersten Heizzonenlänge zugeführt, darin bereichsweise erweicht und aus dem erweichten Bereich wird ein Zwischenzylinder abgezogen. Dieser wird in einem zweiten Elongierprozess mit vertikal orientierter Längsachse kontinuierlich einer anderen Heizzone mit einer zweiten, kürzeren Heizzonenlänge zugeführt, darin bereichsweise erweicht und aus dem erweichten Bereich ein Rohrstrang abgezogen. Aus dem Rohrstrang wird das Hüllrohr durch Ablängen erhalten.

Durch Verwendung von Vorform-Bestandteilen mit niedriger Viskosität, insbesondere im äußeren Mantelbereich ermöglicht das erfindungsgemäße Verfahren den Einsatz vergleichsweise großer Vorformen zu thermischen Prozessierung.

Im Hinblick darauf wird bevorzugt eine sekundäre Vorform gebildet, die einen Außendurchmesser im Bereich von 30 bis 90 mm aufweist, und/oder dass eine primäre Vorform gebildet wird, die einen Außendurchmesser im Bereich von 20 mm bis 70 mm aufweist.

Der Außendurchmesser im Bereich von 30 bis 90 mm ist im Vergleich zum derzeitigen Stand der Technik groß. Da mit zunehmendem Außendurchmesser der Vorform der vorhandene absolute Geometriefehler beim Faserziehen stärker herunterskaliert wird, wird bei Einsatz großer Vorformen auch eine präzisere Fertigung der Hohlkernfaser grundsätzlich ermöglicht. Bei größeren Durchmessern als 90 mm bilden sich im Faserziehprozess jedoch Temperaturgradienten innerhalb des Vorformvolumens, die in Abweichungen der Wanddicke bei den Antiresonanzelementen in der Hohlkernfaser resultieren können. Bei Vorform-Außendurchmessern von weniger als 30 mm ergibt sich kein besonderer Beitrag durch Herunterskalierung des Geometriefehlers mehr. Darüber hinaus ist es vorteilhaft, eine große primäre Vorform zu bilden, deren Außendurchmesser im Bereich von 20 bis 70 mm liegt. Hierbei handelt es sich um einen vergleichsweise großen Außendurchmesser. Im Stand der Technik liegen die Außendurchmesser der primären Vorformen (Canes) typischerweise bei 4 bis 6 mm.

Bei einer bevorzugten Verfahrensvariante umfasst die Bildung von Vorformlingen für Antiresonanzelemente gemäß Verfahrensschritt (b) ein Anordnen der Antiresonanzelement-Vorformlinge an Soll-Positionen der Innenseite der Hüllrohr-Wandung, wobei zum Anordnen eine Positionierungsschablone eingesetzt wird, die Halteelemente zur Positionierung der Antiresonanzelement-Vorformlinge an den Soll-Positionen aufweist.

Die Positionierungsschablone weist beispielsweise einen in die Hüllrohr-Innenbohrung ragenden Schaft auf, der mit Halteelementen in Form mehrerer radial nach außen weisender Haltearme versehen ist.

Die konstruktiv vorgegebene sternförmige Anordnung der Halteelemente erleichtert die exakte Positionierung der Antiresonanzelement-Vorformlinge an den jeweiligen Soll-Positionen und deren Fixierung. Dabei wird die Positionierungsschablone vorzugsweise ausschließlich im Bereich der Hüllrohr-Stirnseiten eingesetzt, vorzugsweise im Bereich beider Hüllrohr-Stirnseiten.

Die Genauigkeit der Positionierung der Vorformlinge an der Innenmantelfläche des Hüllrohrs wird verbessert, indem die Hüllrohr-Innenseite durch spanende Bearbeitung erzeugt wird, insbesondere durch Bohren, Fräsen, Schleifen, Honen und/oder Polieren.

Hinsichtlich der Herstellung der Vorform für die Hohlkernfaser wird die oben angegebene technische Aufgabe ausgehend von einem Verfahren der eingangs genannten Gattung erfindungsgemäß dadurch gelöst, dass bei der Weiterverarbeitung der primären Vorform gemäß Verfahrensschritt (c) ein Überfangzylinder eingesetzt wird, der ein radiales Viskositätsprofil aufweist, bei dem die Viskosität in der Überfangzylinder-Wandung von einem Viskositäts-Minimum η(Zₘᵢₙ) zur Überfangzylinder-Innenseite hin zunimmt.

Die Vorform ist Ausgangspunkt für die Herstellung der Antiresonanten Hohlkernfaser. Durch Elongieren der Vorform wird entweder direkt die Antiresonante Hohlkernfaser gezogen oder es wird zunächst ein Halbzeug erzeugt, aus dem anschließend die Antiresonante Hohlkernfaser gezogen wird. Die Herstellung der Vorform umfasst das Aufkollabieren von zusätzlichem Mantelmaterial auf die primäre Vorform, wobei dafür ein Überfangzylinder eingesetzt wird, der ein radiales Viskositätsprofil aufweist, bei dem die Viskosität zur Überfangzylinder-Innenseite hin zunimmt

Dies ermöglicht die Einhaltung von Viskositätsunterschieden zwischen Überfangzylinder und Hüllrohr, ohne dass es zu einer zu großen Stufe an der Kontaktfläche kommt. Maßnahmen zur Herstellung der Vorform sind weiter oben im Zusammenhang der Herstellung der Hohlkernfaser erläutert und diese Erläuterungen werden hiermit einbezogen.

### Definitionen

Einzelne Verfahrensschritte und Begriffe der obigen Beschreibung werden im Folgenden ergänzend definiert. Die Definitionen sind Bestandteil der Beschreibung der Erfindung. Bei einem sachlichen Widerspruch zwischen einer der folgenden Definitionen und der übrigen Beschreibung ist das in der Beschreibung Gesagte maßgeblich.

### Antiresonanzelemente

Die Antiresonanzelemente können einfache oder verschachtelte Strukturelemente der Hohlkernfaser sein. Sie haben mindestens zwei Wandungen, die aus Richtung des Hohlkerns gesehen eine negative Krümmung haben (konvex) oder keine Krümmung haben (plan, gerade). Sie bestehen in der Regel aus einem Material, das für das Arbeitslicht transparent ist, beispielsweise aus Glas, insbesondere aus dotiertem oder nicht dotiertem SiO₂, einem Kunststoff, insbesondere aus einem Polymer, aus einem Verbundwerkstoff oder aus kristallinem Material.

### Antiresonanzelement-Vorformling / Antiresonanzelement-Vorstufe

Als Antiresonanzelement-Vorformlinge werden Bauteile oder Bestandteile der Vorform bezeichnet, die im Wesentlichen durch einfaches Langziehen beim Faserziehprozess zu Antiresonanzelementen in der Hohlkernfaser werden. Als Antiresonanzelement-Vorstufen werden Bauteile oder Bestandteile der Vorform bezeichnet, die erst durch Umformung zu Antiresonanzelement-Vorformlingen oder direkt zu Antiresonanzelementen werden. Die Antiresonanzelement-Vorformlinge können einfache oder verschachtelte Bauteile sein, an denen zusätzlich Positionierhilfen fixiert sein können. Sie liegen ursprünglich in der primären Vorform (Cane) vor.

Durch Weiterverarbeitung der primären Vorform, insbesondere durch Heißumformschritte, können Zwischenprodukte entstehen, in denen die ursprünglichen Antiresonanzelement-Vorformlinge in einer gegenüber der ursprünglichen Form veränderten Form vorliegen. Die veränderte Form wird hier ebenfalls als Antiresonanzelement-Vorformling oder auch als Antiresonanzelement-Vorstufe bezeichnet.

### Vorform / primäre Vorform / sekundäre Vorform

Die Vorform ist dasjenige Bauteil, aus dem die Antiresonante Hohlkernfaser gezogen wird. Es ist eine primäre Vorform oder eine durch Weiterverarbeitung der primären Vorform erzeugte sekundäre Vorform. Die Weiterverarbeitung der primären Vorform zu einer sekundären Vorform, aus der die Hohlkernfaser gezogen wird, kann eine einmalige oder wiederholte Durchführung von einem oder mehreren der folgenden Heißformprozesse umfassen:
(i) Elongieren,
(ii) Kollabieren,
(iii) Kollabieren und gleichzeitiges Elongieren,
(iv) Aufkollabieren von zusätzlichem Mantelmaterial,
(v) Aufkollabieren von zusätzlichem Mantelmaterial und anschließendes Elongieren,
(vi) Aufkollabieren von zusätzlichem Mantelmaterial und gleichzeitiges Elongieren.

### Elongieren / Kollabieren

Beim Elongieren wird die primäre Vorform gelängt. Die Längung kann ohne gleichzeitiges Kollabieren erfolgen. Das Elongieren kann maßstäblich erfolgen, so dass sich beispielsweise die Form und Anordnung von Bauteilen oder Bestandteilen der primären Vorform im elongierten Endprodukt widerspiegeln. Beim Elongieren kann die primäre Vorform aber auch nicht-maßstäblich gezogen und ihre Geometrie verändert werden.

Beim Kollabieren wird eine Innenbohrung verengt oder Ringspalte zwischen rohrförmigen Bauteil werden geschlossen oder verengt. Das Kollabieren geht in der Regel mit einem Elongieren einher.

### Hohlkern / Innerer Mantelbereich / Äußerer Mantelbereich / Cane

Das Ensemble aus mindestens einem Hüllrohr und darin lose aufgenommenen oder fest fixierten Vorformlingen oder Vorstufen für Antiresonanzelemente wird hier auch als "primäre Vorform" oder "Cane" bezeichnet. Die primäre Vorform (Cane) umfasst den Hohlkern und einen Mantelbereich. Dieser Mantelbereich wird auch als "innerer Mantelbereich" bezeichnet, wenn es auch einen "äußeren Mantelbereich" gibt, der beispielsweise durch Aufkollabieren auf den Cane erzeugt worden ist, und wenn zwischen diesen Mantelbereichen unterschieden werden soll. Die Bezeichnungen "innerer Mantelbereich" und "äußerer Mantelbereich" werden auch für die entsprechenden Bereiche in der Hohlkernfaser oder in Zwischenprodukten genutzt, die durch Weiterverarbeitung der primären Vorform erhalten werden.

Die Bezeichnung "Rohrinnenseite" wird auch als Synonym für "Rohr-Innenmantelfläche" und die Bezeichnung "Rohraußenseite" wird auch als Synonym für "Rohr-Außenmantelfäche" verwendet. Der Begriff "Innenbohrung" in Verbindung mit einem Rohr besagt nicht, dass die Innenbohrung durch einen Bohrvorgang erzeugt worden ist.

### Spanende Bearbeitung

Darunter werden trennende mechanische Fertigungsverfahren zur trennenden Bearbeitung eines Werkstücks verstanden, insbesondere Drehen, Schneiden, Bohren, Sägen, Fräsen und Schleifen. Durch diese Bearbeitung wird eine sich in Richtung der Hüllrohr-Längsachse erstreckende Längsstruktur geschaffen, die als Positionierungshilfe für die Antiresonanzelement-Vorformlinge dient. Die Längsstruktur ist von der Hüllrohr-Innenseite zugänglich; sie kann sich auch bis zur Außenseite durch die gesamte Hüllrohr-Wandung erstrecken.

### Teilchengröße und Teilchengrößenverteilung

Teilchengröße und Teilchengrößenverteilung der SiO₂-Partikel werden anhand der D₅₀-Werte charakterisiert. Diese Werte werden aus Partikelgrößen-Verteilungskurven entnommen, die das kumulative Volumen der SiO₂-Partikel in Abhängigkeit von der Partikelgröße zeigen. Die Teilchengrößenverteilungen werden häufig anhand der jeweiligen D₁₀-, D₅₀- und D₉₀-Werte charakterisiert. Dabei kennzeichnet der D₁₀-Wert diejenige Teilchengröße, die von 10% des kumulativen Volumens der SiO₂-Teilchen nicht erreicht wird, und dementsprechend der D₅₀-Wert und der D₉₀-Wert diejenige Partikelgrößen, die von 50% beziehungsweise von 90% des kumulativen Volumens der SiO₂-Partikel nicht erreicht wird. Die Partikelgrößenverteilung wird durch Streulicht- und Laserbeugungsspektroskopie nach ISO 13320 erm ittelt.

### Ausführungsbeispiel

Nachfolgend wird die Erfindung anhand eines Ausführungsbeispiels und einer Zeichnung näher erläutert. Im Einzelnen zeigt in schematischer Darstellung
- **Figur** 1: eine koaxiale Rohr-Anordnung aus einem Überfangzylinder und einer primären Vorform, die sich aus einem Hüllrohr und darin positionierten und fixierten Antiresonanzelement-Vorformlingen zusammensetzt anhand einer Ansicht auf den radialen Querschnitt,
- Figur 2: ein Diagramm zum radialen Verlauf der Fluor-Konzentration und der Viskosität beim Überfangzylinder und beim Hüllrohr, und
- Figur 3: eine Skizze zur Erläuterung eines idealen radialen Konzentrations- beziehungsweise Viskositätsprofils einer Vorform für eine Hohlkernfaser.

Bei der Herstellung der Hohlkernfaser beziehungsweise der Vorform für die Hohlkernfaser ist eine Vielzahl von Bauteilen miteinander zu verbinden. Darüber hinaus kann es bei der Durchführung von Heißformprozessen hilfreich sein, vorhandene Spalte oder Kanäle der Vorform zu versiegeln. Zum Verbinden beziehungsweise zur Versiegelung wird eine auf SiO₂ basierende Versiegelungs- oder Verbindungsmasse eingesetzt, wie sie aus der DE 10 2004 054 392 A1 bekannt ist. Dabei wird durch Nassvermahlen von Quarzglaskörnung ein wässriger Schlicker erzeugt, der amorphe SiO₂-Partikel mit einer Partikelgrößenverteilung enthält, die durch einen D₅₀-Wert von etwa 5 µm und durch einen D₉₀-Wert von etwa 23 µm gekennzeichnet ist. Dem Basisschlicker wird weitere amorphe SiO₂-Körnung mit einer mittleren Korngröße von etwa 5 µm zugemischt. Der als Verbindungsmasse eingesetzte Schlicker hat einen Feststoffgehalt von 90%, der zu mindestens 99,9 Gew.-% aus SiO₂ besteht.

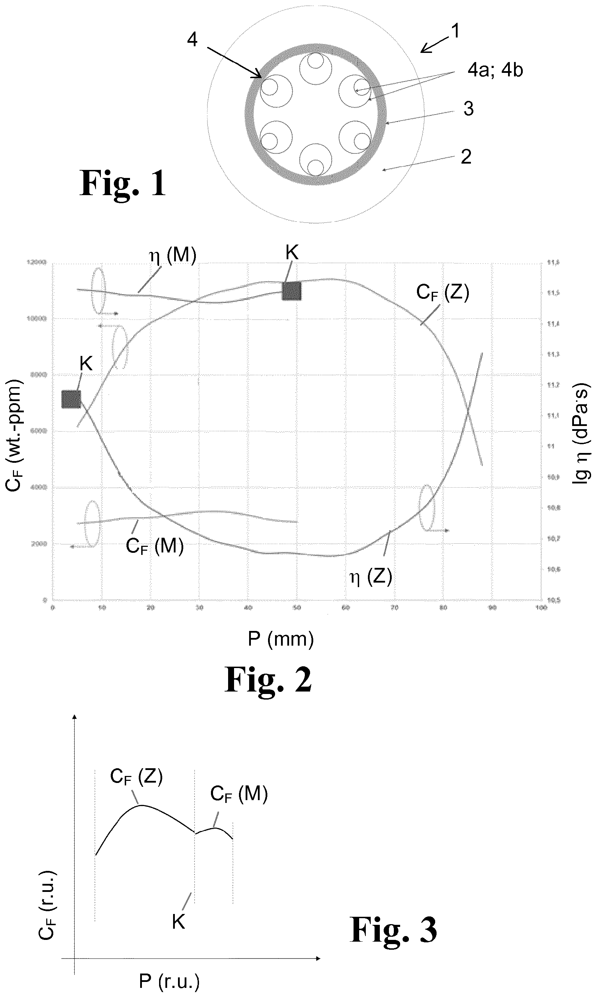

**Figur 1** zeigt schematisch die koaxiale Rohr-Anordnung 1 mit einem Überfangzylinder 2, einem Hüllrohr 3 mit einer Hüllrohr-Wandung, an deren Innenmantelfläche an zuvor definierten azimutalen Positionen im gleichmäßigen Abstand Antiresonanzelement-Vorformlinge 4 fixiert sind; im Ausführungsbeispiel sind es sechs Vorformlinge 4, in einer anderen, nicht dargestellten bevorzugten Ausführungsform ist es eine ungeradzahlige Anzahl von Vorformlingen.

Das Hüllrohr 3 hat einen Außendurchmesser von 27 mm und einen Innendurchmesser von 20 mm. Die Antiresonanzelement-Vorformlinge 4 liegen als Ensemble miteinander verschachtelter Strukturelemente aus einem ARE-Außenrohr 4a und einem ARE-Innenrohr 4b vor. Das ARE-Außenrohr 4a hat einen Außendurchmesser von 6,2 mm und das ARE-Innenrohr 4b hat einen Außendurchmesser von 2,5 mm. Die Wandstärke beider Strukturelemente (4a; 4b) ist gleich und beträgt 0,3 mm. Alle rohrförmigen Bestandteile 2, 3, 4a, 4b haben eine Länge von 700 mm.

Die Antiresonanzelement-Vorformlinge 4 werden an der Innenwand des Hüllrohrs 3 mittels der auf SiO₂ basierenden Verbindungsmasse fixiert. Die Verbindungsmasse wird auf der Hüllrohr-Innenmantelfläche lokal im Bereich der stirnseitigen Enden aufgetragen und die Antiresonanzelement-Vorformlinge 4 werden darauf unter Einsatz einer Positionierungs-Schablone mit konstruktiv vorgegebener sternförmiger Anordnung von Haltearmen für die einzelnen Antiresonanzelement-Vorformlinge 4 aufgesetzt. Die Einwirkung der Positionierungs-Schablone ist dabei auf den Bereich um die beiden stirnseitigen Hüllrohr-Enden beschränkt. Durch diese Methode wird eine genaue und reproduzierbare Verbindung zwischen Hüllrohr 3 und Antiresonanzelement-Vorformlingen 4 geschaffen. Zur Fixierung genügt eine Verfestigung der Verbindungsmasse bei niedriger Temperatur unterhalb von 300 °C, so dass eine starke Erwärmung der umliegenden Bereiche und somit wird eine Verformung Antiresonanzelement-Vorformlinge 4 vermieden wird.

Die so erhaltene primäre Vorform wird mit dem Überfangzylinder 2 aus Quarzglas überfangen. Der Überfangzylinder 2 hat einen Außendurchmesser von 63,4 mm und eine Wandstärke von 17 mm. Beim Aufkollabieren des Überfangzylinders 2 auf das Hüllrohr 3 wird die koaxiale Rohranordnung gleichzeitig elongiert. Dazu wird die koaxiale Anordnung von Hüllrohr 3 und Überfangzylinder 2 bei vertikal orientierter Längsachse von unten kommend einer temperaturgeregelten Heizzone zugeführt und darin mit dem oberen Ende der Anordnung beginnend zonenweise erweicht. Die Heizzone wird auf eine Soll-Temperatur von 1580 °C mit einer Regelgenauigkeit von +/- 0.1 °C gehalten. Dadurch können Temperaturschwankungen im Heißformprozess auf weniger als +/- 0.5°C begrenzt werden.

Die im Kollabier- und Elongierprozess gebildete sekundäre Vorform hat einen Außendurchmesser von etwa 50 mm und eine aus äußerem Mantel und innerem Mantel zusammengesetzte Mantel-Wanddicke von 16,6 mm. Sie wird anschließend zu der Antiresonanten Hohlkernfaser gezogen. Vorher werden alle Antiresonanzelement-Vorformlinge mit der Versiegelungs- oder Verbindungsmasse verschlossen. Die Verschlussmasse ist dabei nur auf diejenige Stirnseite der Antiresonanzelement-Vorformlinge aufgebracht, die beim Faserziehprozess nach oben weist. Diese Stirnseite wird mit einem Halterohr aus Quarzglas verbunden, der gleichzeitig als Gasanschluss dient. Der Halter wird mittels der Versiegelungs- oder Verbindungsmasse am Überfangzylinder 2 und am Hüllrohr 3 fixiert.

Beim Faserziehprozess wird die sekundäre Vorform bei vertikal orientierter Längsachse von oben kommend einer temperaturgeregelten Heizzone zugeführt und darin mit dem unteren Ende beginnend zonenweise erweicht. Gleichzeitig wird dem Kernbereich (Hohlkern) Gas zugeführt, so dass sich im Kernbereich ein Innendruck von 4 mbar einstellt. Die Heizzone wird auf eine Soll-Temperatur von etwa 2080 °C mit einer Regelgenauigkeit von +/- 0.1 °C gehalten. Dadurch können Temperaturschwankungen im Heißformprozess auf weniger als +/- 0.5°C begrenzt werden.

Durch Ziehen der Vorform zur Hohlkernfaser wird der vorhandene absolute Geometriefehler herunterskaliert, so dass in der Hohlkernfaser die aus den Antiresonanzelement-Vorformlingen erhaltenen Antiresonanzelemente eine maximale Abweichung von weniger als 3,5% in der Wanddicke aufweisen (bezogen auf eine mittlere Wanddicke).

Der geringe Fehler in der Wanddicke wird einerseits auf den Einsatz der vergleichsweise großen sekundären Vorform und das damit einhergehende Abskalieren der ursprünglichen vorhandenen absoluten Geometrieabweichungen zurückgeführt und andererseits auf vergleichsweise niedrige Prozessierungstemperaturen bei den Heißformprozessen (Elongieren und Kollabieren, Faserziehen). Die niedrigeren Prozessierungstemperaturen sind wiederum darauf zurückzuführen, dass, der Überfangzylinder 2 und das Hüllrohr 3 aus Quarzglas bestehen, das mit Fluor dotiert ist. Diese Bestandteile stellen in der koaxialen Anordnung 1 die flächenstärksten Bestanteile dar und bestimmten maßgeblich die Prozessierungstemperatur. Durch die Fluor-Dotierung der flächenstärksten Bestanteile der sekundären Vorform kann die notwendige Prozessierungstemperatur abgesenkt und damit die relative Steifigkeit und thermische Stabilität der weiter innen liegenden Antiresonanzelement-Vorformlinge 4 indirekt verbessert werden, indem sie einer niedrigeren Temperatur beim Heißformprozess ausgesetzt werden.

In der folgenden Tabelle 1 sind Angaben zu den Materialien der Bestandteile der koaxialen Anordnung beziehungsweise der sekundären Vorform zusammengefasst.

**Tabelle 1**

| **Bezugsziffer in** **Fig. 1** | **Bezeichnung / Funktion** | **Material** |
|---|---|---|
| 2 | Überfangzylinder | Fluor-dotiertes Quarzglas 10.000 Gew.-ppm |
| 3 | Hüllrohr | Fluor-dotiertes Quarzglas 2.700 Gew.-ppm |
| 4a | ARE-Außenrohr | undotiertes Quarzglas |
| 4b | ARE-Innenrohr | undotiertes Quarzglas |

Die mit Fluor dotierten Quarzglasrohre (2; 3) haben ein Fluor-Konzentrations-profi mit einem Maximum der Fluor-Konzentration in der Mitte der Rohrwandung. Die in der Spalte "Material" von Tabelle 1 genannten Daten zur Fluor-Konzentration des Quarzglases sind Mittelwerte.

Das Diagramm von **Figur 2** zeigt gemessene Fluor-Konzentrationsprofile C (in Gew.-ppm) für ein Hüllrohr C_{F}(M) und bei einem Überfangzylinder C_{F}(Z)", sowie aus den Konzentrationsprofilen für eine Temperatur von 1250 °C berechnete Viskositätsprofile η (in Ig dPa s) entlang der radialen Ortskoordinate (Position P (in mm)).

Der Fluor-Konzentrationsverlauf in Quarzglas wird durch Infrarot-Spektroskopie ermittelt. Die Viskosität skaliert für eine gegebene Temperatur mit der Fluor-Konzentration und wird ausgehend von einem Basiswert für undotiertes Quarzglas (η = 11,8 dPa s (entspricht 100 %)) anhand folgender Formel berechnet:
Abnahme der Viskosität bei 1250 °C: 12 % (±2 %) pro Gew.-% Fluor.

In Tabelle 2 sind Viskositätswerte für Fluorgehalte handelsüblicher Quarzglasqualitäten angegeben (für eine Messtemperatur von 1250 °C).

**Tabelle 2**

| **Fluor-Gehalt [Gew.-ppm]** | **Ig η @ 1250 °C [dPa*s]** |
|---|---|
| 0 | 11,80 |
| 4800 | 11,00 |
| 10000 | 10,50 |
| 13000 | 9,80 |

Das Diagramm von **Figur 2** zeigt das die Viskosität des Überfangzylinder η(Z) niedriger ist als die des Hüllrohres η(M). Bei beiden Quarzglasrohren hat die Viskosität in der Rohrmitte ein Minimum, das beim Hüllrohr bei etwa 10^{11,45} dPa s liegt und beim Überfangzylinder bei etwa 10^{10,65} dPa s. Der Viskositäts-Unterschied der Minima (in Ig dPa s) beträgt somit etwa 0,80 dPa s. Der Unterschied zwischen der Viskosität des Hüllrohrs im Bereich der Hüllrohr-Außenseite (etwa 10^{11,5} dPa s) und dem Viskositätsminimum beim Überfangzylinder liegt bei etwa 0,85 (in Ig dPa s).

In der Vorform bilden die Außenmantelfläche des Hüllrohres und die Innenmantelfläche des Überfangzylinders eine gemeinsame Kontaktfläche. Die örtliche Position der Kontaktfläche übertragen auf die Viskositätsprofile ist im Diagramm durch die beiden Rechtecke "K" angedeutet. An diesen Positionen ergeben sich folgende Werte für die Viskositäten von Überfangzylinder und Hüllrohr:

| | | |
|---|---|---|
| Hüllrohr: | etwa 11,5 | Ig(dPa·s) |
| Überfangzylinder: | etwa 11,15 | Ig(dPa·s) |

Der Viskositäts-Unterschied im Bereich der Kontaktfläche beträgt somit etwa 0,35 (in Ig dPa.s).

Die Strukturelemente (4a;4b) der Antiresonanzelement-Vorformlinge (4) bestehen aus undotiertem Quarzglas und haben eine Viskosität von etwa 10^{11,8} dPa s.

Das Diagramm von **Figur 3** zeigt den radialen Dotierstoff-Konzentrationsverlauf über der Wandung der sekundären Vorform in idealisierter Form. Auf der y-Achse ist die Fluor-Konzentration C_{F} (in relativer Einheit) gegen die Ortskoordinate P (in relativer Einheit) aufgetragen. An der Kontaktfläche "K" ist die Dotierstoff-Konzentration C_{F}(Z) des Fluor-dotierten Quarzglases, das aus dem Überfangzylinder stammt idealerweise so hoch wie die Konzentration C_{F}(M) des Fluor-dotierten Quarzglases, das aus dem Hüllrohr stammt. Das entsprechende Viskositätsprofil der Viskositäten von Hüllrohr und Überfangzylinder zeigt demnach an der Kontaktfläche K beiderseits die gleiche Viskosität.

## Patentansprüche

1. Verfahren zur Herstellung einer Antiresonanten Hohlkernfaser, die einen sich entlang einer Faser-Längsachse erstreckenden Hohlkern und einen den Hohlkern umgebenden inneren Mantelbereich aufweist, der mehrere Antiresonanzelemente umfasst, mit den Verfahrensschritten:
(a) Bereitstellen einer primären Vorform (1) für die Hohlkernfaser, die mindestens ein Hüllrohr (3) umfasst, das eine Hüllrohr-Innenbohrung und eine Hüllrohr-Längsachse aufweist, entlang der sich eine von einer Innenseite und einer Außenseite begrenzte Hüllrohr-Wandung erstreckt,
(b) Bildung einer Anzahl von Vorstufen oder von Vorformlingen (4) für Antiresonanzelemente an Soll-Positionen der Hüllrohr-Wandung, und
(c) Weiterverarbeitung der primären Vorform (1) zu einer sekundären Vorform, aus der die Hohlkernfaser gezogen wird, wobei die Weiterverarbeitung ein einmaliges oder wiederholtes Aufkollabieren von zusätzlichem Mantelmaterial in Form eines Überfangzylinders (2) umfasst, wobei der Überfangzylinder (2) eine dem Hüllrohr (3) zugewandte Überfangzylinder-Innenseite, eine Überfangzylinder-Außenseite und dazwischen einen Überfangzylinder-Wandung aufweist,
**dadurch gekennzeichnet, dass** bei der Weiterverarbeitung der primären Vorform (1) gemäß Verfahrensschritt (c) ein Überfangzylinder (2) eingesetzt wird, der ein radiales Viskositätsprofil aufweist, bei dem die Viskosität in der Überfangzylinder-Wandung von einem Viskositäts-Minimum η(Zₘᵢₙ) zur Überfangzylinder-Innenseite hin zunimmt.

2. Verfahren nach Anspruch 1, **dadurch gekennzeichnet, dass** die Viskosität im Bereich der Überfangzylinder-Innenseite einen Viskositäts-Wert η(Z) aufweist, und dass das Hüllrohr im Bereich der Hüllrohr-Außenseite einen Viskositäts-Wert η(M) aufweist, wobei bei einer Messtemperatur von 1250 °C für die Viskositäts-Werte gilt (bei Angabe der Viskosität als logarithmischer Wert in dPa s): η(M) = η(Z) ±0,5 dPa·s, vorzugsweise η(M) = η(Z) ±0,3 dPa s.

3. Verfahren nach Anspruch 1, **dadurch gekennzeichnet, dass** für das Viskositäts-Minimum η(Zₘᵢₙ) bei einer Messtemperatur von 1250 °C gilt (bei Angabe der Viskosität als logarithmischer Wert): η(M) - η(Zₘᵢₙ) > 0,8 dPa s, vorzugsweise > 1 dPa s.

4. Verfahren nach einem der vorhergehenden Ansprüche, **dadurch gekennzeichnet, dass** das Hüllrohr (3) zwischen seiner Hüllrohr-Außenseite und seiner Hüllrohr-Innenseite ein radiales Viskositätsprofil aufweist, bei dem die Viskosität zur Innenseite hin graduell zunimmt.

5. Verfahren nach Anspruch 4, **dadurch gekennzeichnet, dass** das Hüllrohr (3) ein Viskositätsprofil mit einem Viskositäts-Maximum η(Mₘₐₓ) hat und dass mindestens ein Teil der Vorstufen für Antiresonanzelemente als rohrförmige Antiresonanzelement-Vorformlinge (4) vorliegen, die vorzugsweise aus mehreren, miteinander verschachtelten Strukturelementen zusammengesetzt sind, umfassend ein ARE-Außenrohr (4a) und ein darin eingesetztes ARE-Innenrohr (4b), und dass die Antiresonanzelement-Vorformlinge (4) aus Quarzglas bestehen, das bei einer Messtemperatur von 1250 °C gegenüber der maximalen Viskosität η(Mₘₐₓ) des Quarzglases des Hüllrohres (3) eine um mindestens 0,4 dPas höhere Viskosität, vorzugsweise eine um mindestens 0,5 dPas höhere Viskosität, aufweist (bei Angabe der Viskosität als logarithmischer Wert).

6. Verfahren nach einem der vorhergehenden Ansprüche, **dadurch gekennzeichnet, dass** der Überfangzylinder (2) aus Quarzglas besteht und dass das Viskositätsprofil des Überfangzylinders (2) durch mindestens einen die Viskosität von Quarzglas absenkenden Dotierstoff erzeugt wird, wobei der Dotierstoff vorzugsweise Fluor, Chlor und/oder Hydroxylgruppen enthält.

7. Verfahren nach einem der vorhergehenden Ansprüche, **dadurch gekennzeichnet, dass** das Hüllrohr (3) aus Quarzglas besteht und dass das Viskositätsprofil des Hüllrohres (3) durch mindestens einen die Viskosität von Quarzglas absenkenden Dotierstoff erzeugt wird, wobei der Dotierstoff vorzugsweise Fluor, Chlor und/oder Hydroxylgruppen enthält.

8. Verfahren nach Anspruch 6 und 7, **dadurch gekennzeichnet, dass** das Quarzglas des Überfangzylinders (2) und des Hüllrohres (3) als Dotierstoff Fluor in einer Konzentration zwischen 500 und 8000 Gew.-ppm enthält.

9. Verfahren nach einem der vorhergehenden Ansprüche, **dadurch gekennzeichnet, dass** das Hüllrohr (3) in einem Vertikalziehverfahren ohne Formwerkzeug mit zweistufigem Elongierprozess hergestellt wird, wobei in der ersten Stufe ein Ausgangshohlzylinders aus Glas zur Einstellung von Ausgangshohlzylinder-Endmaßen mechanisch bearbeitet wird, der Ausgangszylinder in einem ersten Elongierprozess mit vertikal orientierter Längsachse kontinuierlich einer ersten Heizzone mit einer ersten Heizzonenlänge zugeführt, darin bereichsweise erweicht und aus dem erweichten Bereich ein Zwischenzylinder abgezogen wird, der Zwischenzylinder in einem zweiten Elongierprozess mit vertikal orientierter Längsachse kontinuierlich einer zweiten Heizzone mit einer zweiten, kürzeren Heizzonenlänge zugeführt, darin bereichsweise erweicht und aus dem erweichten Bereich ein Rohrstrang abgezogen wird , und aus dem Rohrstrang das Hüllrohr (3) durch Ablängen erhalten wird.

10. Verfahren nach einem der vorhergehenden Ansprüche, **dadurch gekennzeichnet, dass** eine sekundäre Vorform gebildet wird, die einen Außendurchmesser im Bereich von 30 bis 90 mm aufweist, und/oder dass eine primäre Vorform (1) gebildet wird, die einen Außendurchmesser im Bereich von 20 mm bis 70 mm aufweist.

11. Verfahren nach einem der vorhergehenden Ansprüche, **dadurch gekennzeichnet, dass** die Bildung von Vorformlingen für Antiresonanzelemente (4) gemäß Verfahrensschritt (b) ein Anordnen der Antiresonanzelement-Vorformlinge (4) an Soll-Positionen der Innenseite der Hüllrohr-Wandung umfasst, wobei zum Anordnen eine Positionierungsschablone eingesetzt wird, die Halteelemente zur Positionierung der Antiresonanzelement-Vorformlinge (4) an den Soll-Positionen aufweist.

12. Verfahren zur Herstellung einer Vorform für eine Antiresonante Hohlkernfaser, die einen sich entlang einer Faser-Längsachse erstreckenden Hohlkern und einen den Hohlkern umgebenden inneren Mantelbereich aufweist, der mehrere Antiresonanzelemente umfasst, mit den Verfahrensschritten:
(a) Bereitstellen einer primären Vorform (1) für die Hohlkernfaser, die mindestens ein Hüllrohr (3) umfasst, das eine Hüllrohr-Innenbohrung und eine Hüllrohr-Längsachse aufweist, entlang der sich eine von einer Innenseite und einer Außenseite begrenzte Hüllrohr-Wandung erstreckt,
(b) Bildung einer Anzahl von Vorstufen oder von Vorformlingen (4) für Antiresonanzelemente an Soll-Positionen der Hüllrohr-Wandung, und
(c) Weiterverarbeitung der primären Vorform (1) zu einer sekundären Vorform für die Hohlkernfaser, wobei die Weiterverarbeitung ein einmaliges oder wiederholtes Aufkollabieren von zusätzlichem Mantelmaterial in Form eines Überfangzylinders (2) umfasst, wobei der Überfangzylinder (2) eine dem Hüllrohr (3) zugewandte Überfangzylinder-Innenseite, eine Überfangzylinder-Außenseite und dazwischen einen Überfangzylinder-Wandung aufweist,
**dadurch gekennzeichnet, dass** bei der Weiterverarbeitung der primären Vorform (1) gemäß Verfahrensschritt (c) ein Überfangzylinder (2) eingesetzt wird, der ein radiales Viskositätsprofil aufweist, bei dem die Viskosität in der Überfangzylinder-Wandung von einem Viskositäts-Minimum η(Zmin) zur Überfangzylinder-Innenseite hin zunimmt.

## Claims

1. A method for producing an anti-resonant hollow-core fiber which comprises a hollow core extending along a fiber longitudinal axis and an inner casing region that surrounds the hollow core and comprises a plurality of anti-resonant elements, comprising the method steps of:
(a) providing a primary preform (1) for the hollow-core fiber, which preform has at least one sheath (3) comprising a sheath inner bore and a sheath longitudinal axis along which a sheath wall delimited by an inner side and an outer side extends,
(b) forming a number of precursors or preforms (4) for anti-resonance elements at desired positions of the sheath wall, and
(c) further processing the primary preform (1) to form a secondary preform from which the hollow-core fiber is drawn, the further processing comprising a single or repeated collapse of additional casing material in the form of an overlay cylinder (2), the overlay cylinder (2) comprising an overlay cylinder inner side facing the sheath (3), an overlay cylinder outer side and an overlay cylinder wall therebetween,
**characterized in that** during the further processing of the primary preform (1) according to method step (c), an overlay cylinder (2) is used which has a radial viscosity profile in which the viscosity in the overlay cylinder wall increases from a viscosity minimum η(Zₘᵢₙ) toward the inner side of the overlay cylinder.

2. The method according to claim 1, **characterized in that** the viscosity in the region of the inner side of the overlay cylinder has a viscosity value η(Z), **and in that** the sheath has, in the region of the sheath outer side, a viscosity value η(M), where, at a measuring temperature of 1250°C, the following applies to the viscosity values (if the viscosity is given as a logarithmic value in dPa·s): η(M) = η(Z) ±0.5 dPa·s, preferably η(M) = η(Z) ±0.3 dPa s.

3. The method according to claim 1, **characterized in that** for the viscosity minimum η(Zₘᵢₙ), at a measuring temperature of 1250°C, the following applies (if the viscosity is given as a logarithmic value): η(M) - η(Zₘᵢₙ) > 0.8 dPa s, preferably > 1 dPa s.

4. The method according to any of the preceding claims, **characterized in that** the sheath (3) has, between its sheath outer side and its sheath inner side, a radial viscosity profile, in which the viscosity gradually increases toward the inner side.

5. The method according to claim 4, **characterized in that** the sheath (3) has a viscosity profile with a viscosity maximum η(Mₘₐₓ), **and in that** at least some of the precursors for anti-resonance elements are in the form of tubular anti-resonance element preforms (4), which are preferably composed of a plurality of nested structural elements, comprising an ARE outer tube (4a) and an ARE inner tube (4b) inserted therein, **and in that** the antiresonance element preforms (4) are made of quartz glass, which, at a measuring temperature of 1250°C, has a viscosity that is at least 0.4 dPa·s higher, preferably at least 0.5 dPa·s higher (when the viscosity is specified as a logarithmic value), than the maximum viscosity η(Mₘₐₓ) of the quartz glass of the sheath (3).

6. The method according to any of the preceding claims, **characterized in that** the overlay cylinder (2) consists of quartz glass, **and in that** the viscosity profile of the overlay cylinder (2) is produced by at least one dopant which reduces the viscosity of quartz glass, the dopant preferably containing fluorine, chlorine, and/or hydroxyl groups.

7. The method according to any of the preceding claims, **characterized in that** the sheath (3) consists of quartz glass, **and in that** the viscosity profile of the sheath (3) is produced by at least one dopant which reduces the viscosity of quartz glass, the dopant preferably containing fluorine, chlorine, and/or hydroxyl groups.

8. The method according to claim 6 and claim 7, **characterized in that** the quartz glass of the overlay cylinder (2) and the sheath (3) contains fluorine as a dopant in a concentration between 500 and 8000 ppm by weight.

9. The method according to any of the preceding claims, **characterized in that** the sheath (3) is produced in a vertical drawing process without a mold with a two-stage elongation process, where in the first stage a starting hollow cylinder made of glass is mechanically processed to set the final dimensions of the starting hollow cylinder, the starting cylinder is continuously fed to a first heating zone with a first heating zone length in a first elongation process with a vertically oriented longitudinal axis, softened therein in regions, and an intermediate cylinder is drawn off from the softened region, the intermediate cylinder is continuously fed to a second heating zone with a second, shorter heating zone length in a second elongation process with a vertically oriented longitudinal axis, softened therein in regions, and a tube strand is drawn off from the softened region, and the sheath (3) is obtained from the tube strand by cutting to length.

10. The method according to any of the preceding claims, **characterized in that** a secondary preform is formed which has an outer diameter in the range of 30 to 90 mm, and/or **in that** a primary preform (1) is formed which has an outer diameter in the range of 20 mm to 70 mm.

11. The method according to any of the preceding claims, **characterized in that** the formation of preforms for anti-resonance elements (4) according to method step (b) comprises arranging the anti-resonance element preforms (4) at desired positions on the inner side of the sheath wall, a positioning template being used for arranging which has holding elements for positioning the anti-resonance element preforms (4) at the desired positions.

12. A method for producing a preform for an anti-resonant hollow-core fiber which comprises a hollow core extending along a longitudinal axis of the fiber and an inner casing region that surrounds the hollow core and comprises a plurality of anti-resonant elements, comprising the method steps of:
(a) providing a primary preform (1) for the hollow-core fiber, which preform has at least one sheath (3) comprising a sheath inner bore and a sheath longitudinal axis along which a sheath wall delimited by an inner side and an outer side extends,
(b) forming a number of precursors or preforms (4) for anti-resonance elements at desired positions of the sheath wall, and
(c) further processing the primary preform (1) to form a secondary preform for the hollow-core fiber, the further processing comprising a single or repeated collapse of additional casing material in the form of an overlay cylinder (2), the overlay cylinder (2) comprising an overlay cylinder inner side facing the sheath (3), an overlay cylinder outer side and an overlay cylinder wall therebetween,
**characterized in that** during the further processing of the primary preform (1) according to method step (c), an overlay cylinder (2) is used which has a radial viscosity profile in which the viscosity in the overlay cylinder wall increases from a viscosity minimum η(Zmin) toward the inner side of the overlay cylinder.

## Revendications

1. Procédé pour la fabrication d'une fibre à coeur creux antirésonante qui présente un coeur creux s'étendant le long d'un axe longitudinal de fibre et une région enveloppante interne entourant le coeur creux, laquelle comprend plusieurs éléments antirésonance, comportant les étapes de procédé consistant à :
(a) fournir une préforme primaire (1) pour la fibre à coeur creux, laquelle préforme primaire comprend au moins un tube de gaine (3) qui présente un trou interne de tube de gaine et un axe longitudinal de tube de gaine le long duquel s'étend une paroi de tube de gaine délimitée par une face interne et une face externe,
(b) former un certain nombre de précurseurs ou de préformes (4) pour des éléments antirésonance à des positions de consigne de la paroi de tube de gaine, et
(c) transformer ultérieurement la préforme primaire (1) en une préforme secondaire à partir de laquelle la fibre à coeur creux est étirée, dans lequel la transformation ultérieure comprend un écrasement unique ou répété de matériau enveloppant supplémentaire sous la forme d'un cylindre de recouvrement (2), dans lequel le cylindre de recouvrement (2) présente une face interne de cylindre de recouvrement tournée vers le tube de gaine (3), une face externe de cylindre de recouvrement et une paroi de cylindre de recouvrement entre elles,
**caractérisé en ce que,** lors de la transformation ultérieure de la préforme primaire (1) selon l'étape de procédé (c), un cylindre de recouvrement (2) est utilisé, lequel présente un profil de viscosité radial dans lequel la viscosité dans la paroi de cylindre de recouvrement augmente d'une viscosité minimale η(Zₘᵢₙ) vers la face interne de cylindre de recouvrement.

2. Procédé selon la revendication 1, **caractérisé en ce que** la viscosité dans la région de la face interne de cylindre de recouvrement présente une valeur de viscosité η(Z), **et en ce que** le tube de gaine présente, dans la région de la face externe de tube de gaine, une valeur de viscosité η(M), dans lequel, à une température de mesure de 1 250 °C, ceci s'applique pour les valeurs de viscosité (lorsque la viscosité est indiquée comme valeur logarithmique en dPa·s) : η(M) = η(Z) ± 0,5 dPa s, de préférence η(M) = η(Z) ± 0,3 dPa s.

3. Procédé selon la revendication 1, **caractérisé en ce que,** pour la viscosité minimale η(Zₘᵢₙ) à une température de mesure de 1 250 °C, ceci s'applique (lorsque la viscosité est indiquée comme valeur logarithmique) : η(M) - η(Zₘᵢₙ) > 0,8 dPa s, de préférence > 1 dPa s.

4. Procédé selon l'une des revendications précédentes, **caractérisé en ce que** le tube de gaine (3) présente, entre sa face externe de tube de gaine et sa face interne de tube de gaine, un profil de viscosité radial dans lequel la viscosité augmente graduellement vers la face interne.

5. Procédé selon la revendication 4, **caractérisé en ce que** le tube de gaine (3) possède un profil de viscosité comportant une viscosité maximale η(Mₘₐₓ) **et en ce qu'**au moins une partie des précurseurs pour éléments antirésonance se présentent en tant que préformes tubulaires d'éléments antirésonance (4) qui sont de préférence composées de plusieurs éléments structuraux imbriqués les uns dans les autres, comprenant un tube externe ARE (4a) et un tube interne ARE (4b) inséré dans celui-ci, **et en ce que** les préformes d'éléments antirésonance (4) sont constituées de verre de quartz qui, à une température de mesure de 1 250 °C, présente une viscosité supérieure d'au moins 0,4 dPa s, de préférence une viscosité supérieure d'au moins 0,5 dPa s, par rapport à la viscosité maximale η(Mₘₐₓ) du verre de quartz du tube de gaine (3) (lorsque la viscosité est indiquée comme valeur logarithmique).

6. Procédé selon l'une des revendications précédentes, **caractérisé en ce que** le cylindre de recouvrement (2) est constitué de verre de quartz et **en ce que** le profil de viscosité du cylindre de recouvrement (2) est généré par au moins un dopant abaissant la viscosité du verre de quartz, dans lequel le dopant contient de préférence du fluor, du chlore et/ou des groupes hydroxyle.

7. Procédé selon l'une des revendications précédentes, **caractérisé en ce que** le tube de gaine (3) est constitué de verre de quartz **et en ce que** le profil de viscosité du tube de gaine (3) est généré par au moins un dopant abaissant la viscosité du verre de quartz, dans lequel le dopant contient de préférence du fluor, du chlore et/ou des groupes hydroxyle.

8. Procédé selon les revendications 6 et 7, **caractérisé en ce que** le verre de quartz du cylindre de recouvrement (2) et du tube de gaine (3) contient comme dopant du fluor à une concentration comprise entre 500 et 8 000 ppm en poids.

9. Procédé selon l'une des revendications précédentes, **caractérisé en ce que** le tube de gaine (3) est fabriqué dans un procédé d'étirage vertical sans outil de formage avec un processus d'élongation en deux étapes, dans lequel, dans la première étape, un cylindre creux de départ en verre est usiné mécaniquement pour régler des dimensions finales de cylindre creux de départ, le cylindre de départ est amené en continu, au cours d'un premier processus d'élongation avec un axe longitudinal orienté verticalement, à une première zone de chauffage comportant une première longueur de zone de chauffage, y est ramolli dans certaines régions, et un cylindre intermédiaire est étiré à partir de la région ramollie, le cylindre intermédiaire est amené en continu, au cours d'un second processus d'élongation avec un axe longitudinal orienté verticalement, à une seconde zone de chauffage comportant une seconde longueur de zone de chauffage plus courte, y est ramolli dans certaines régions, et un tronçon de tube est étiré à partir de la région ramollie, et le tube de gaine (3) est obtenu par tronçonnage à partir du tronçon de tube.

10. Procédé selon l'une des revendications précédentes, **caractérisé en ce qu'**une préforme secondaire est formée, laquelle présente un diamètre externe dans la plage allant de 30 à 90 mm, **et/ou en ce qu'**une préforme primaire (1) est formée, laquelle présente un diamètre externe dans la plage allant de 20 mm à 70 mm.

11. Procédé selon l'une des revendications précédentes, **caractérisé en ce que** la formation de préformes pour éléments antirésonance (4) selon l'étape de procédé (b) comprend une disposition des préformes d'éléments antirésonance (4) à des positions de consigne de la face interne de la paroi de tube de gaine, dans lequel, pour la disposition, un gabarit de positionnement est utilisé, lequel présente des éléments de maintien permettant de positionner les préformes d'éléments antirésonance (4) aux positions de consigne.

12. Procédé pour la fabrication d'une préforme pour une fibre à coeur creux antirésonante qui présente un coeur creux s'étendant le long d'un axe longitudinal de fibre et une région enveloppante interne entourant le coeur creux, laquelle comprend plusieurs éléments antirésonance, comportant les étapes de procédé consistant à :
(a) fournir une préforme primaire (1) pour la fibre à coeur creux, laquelle préforme primaire comprend au moins un tube de gaine (3) qui présente un trou interne de tube de gaine et un axe longitudinal de tube de gaine le long duquel s'étend une paroi de tube de gaine délimitée par une face interne et une face externe,
(b) former un certain nombre de précurseurs ou de préformes (4) pour des éléments antirésonance à des positions de consigne de la paroi de tube de gaine, et
(c) transformer ultérieurement la préforme primaire (1) en une préforme secondaire pour la fibre à coeur creux, dans lequel la transformation ultérieure comprend un écrasement unique ou répété de matériau enveloppant supplémentaire sous la forme d'un cylindre de recouvrement (2), dans lequel le cylindre de recouvrement (2) présente une face interne de cylindre de recouvrement tournée vers le tube de gaine (3), une face externe de cylindre de recouvrement et une paroi de cylindre de recouvrement entre elles,
**caractérisé en ce que,** lors de la transformation ultérieure de la préforme primaire (1) selon l'étape de procédé (c), un cylindre de recouvrement (2) est utilisé, lequel présente un profil de viscosité radial dans lequel la viscosité dans la paroi de cylindre de recouvrement augmente d'une viscosité minimale η(Zmin) vers la face interne de cylindre de recouvrement.
